Europäisches Patentamt

European Patent Office

Office européen des brevets

(11) Publication number: **0 249 369 B1**

(12) EUROPEAN PATENT SPECIFICATION

(45) Date of publication of patent specification: **29.01.92**  (51) Int. Cl.⁵: **B60G  15/06**, F16F 9/54

(21) Application number: **87304807.8**

(22) Date of filing: **01.06.87**

(54) **Vehicle suspension strut assembly including an upper mount.**

(30) Priority: **09.06.86 US 871776**

(43) Date of publication of application:
**16.12.87 Bulletin  87/51**

(45) Publication of the grant of the patent:
**29.01.92 Bulletin  92/05**

(84) Designated Contracting States:
**DE FR GB**

(56) References cited:
**EP-A- 0 126 006
FR-A- 2 563 302
US-A- 4 175 771
US-A- 4 274 655**

(73) Proprietor: **GENERAL MOTORS CORPORA-
TION
General Motors Building 3044 West Grand
Boulevard
Detroit Michigan 48202(US)**

(72) Inventor: **Knable, Joseph James
6387 Denton Hill
Fenton Michigan 48430(US)**
Inventor: **Ferdelman, Donald Clarence
1037 Carlo Drive
Kettering Ohio 45429(US)**
Inventor: **Bojanowski, Gerald Michael
28936 Joan
St. Clair Shores Michigan 48081(US)**

(74) Representative: **Denton, Michael John et al
Patent Section Vauxhall Motors Limited 1st
Floor Gideon House 26 Chapel Street
Luton Bedfordshire LU1 2SE(GB)**

## Description

This invention relates to a vehicle suspension strut assembly as specified in the preamble of claim 1, for example as disclosed in US-A-4,618,127.

A vehicle suspension strut assembly in accordance with the present invention is characterised by the features specified in the characterising portion of claim 1.

The invention is concerned with the provision of a vehicle suspension strut assembly having an upper mount assembly effective to couple the suspension strut to a support structure of the vehicle for providing improved spring suspension and ride and improved jounce and rebound control.

The vehicle suspension strut assembly in accordance with the present invention thereby has the potential to make available a unitized upper mount and jounce bumper assembly having improved spring connection of the strut piston rod and other hydraulic constituents of the strut to the support structure of the vehicle by means of the resilient piston rod bushing and the rate washer, with full-time assist of the main suspension spring being provided by the jounce bumper.

In a preferred embodiment, the vehicle suspension strut assembly of the present invention includes an upper mount and jounce bumper assembly constructed as a unit for ready installation on top of the strut and on the upwardly extending strut piston rod. This upper mount and jounce bumper assembly comprises two main sub-assemblies, namely: (1) an upper plate and piston rod bushing assembly, and (2) a jounce plate and jounce bumper assembly. These sub-assemblies can be quickly attached to one another to form a unitized upper mount assembly in conformity with the present invention. If needed, a dust tube can be attached to the lower end of the jounce bumper to form part of the upper mount assembly.

In this preferred embodiment, the upper plate and piston rod bushing assembly has a sheet metal bushing mount plate comprising a generally flat upper mounting flange for attachment to a mount tower or other support structure in the vehicle. The bushing mount plate also has a generally cylindrical wall or neck portion depending downwardly from the central portion of this plate, and defines an upper opening aligned with an opening in the mount tower. The cylindrical wall surrounds and is bonded to the outer wall of a generally cylindrical piston rod bushing of elastomeric material. Bonded to an inner cylindrical wall of the elastomeric bushing is a tubular metallic mounting sleeve which is adapted to slidably fit on a reduced-diameter end of the piston rod of the strut. A metallic rate washer, fixed to the lower end of the mounting sleeve for assembly purposes, is sized to seat on a shoulder of the piston rod.

In response to jounce motions, the rate washer enters into the cylindrical wall portion surrounding the bushing, to work portions of the elastomeric material of the bushing in shear and in compression, causing bulk movement upwardly to cushion and control jounce motion of the piston rod.

The jounce plate and jounce bumper assembly comprises a cup-like jounce bumper connector plate having an upper flange which is adapted to fit under the flange of the mount plate and is adapted to be secured thereto by tab means bent over from the upper plate. The jounce bumper connector plate has a cylindrical wall that depends from its upper flange to encompass the cylindrical wall or neck portion of the bushing mount plate. The lower end of this jounce bumper connector plate is turned radially inwardly to provide an annular opening of predetermined diameter to accommodate the piston rod extending therethrough and the top portion of a jounce bumper which is secured thereto. A large washer-like jounce plate having the same internal diameter as the annular opening in the bottom of the jounce plate is spot-welded thereto. The jounce bumper is an elongate generally cylindrical unit of micro-cellular polyurethane or other suitable material that fits on the piston rod and is formed with internal and external grooves to provide a selected load/deflection curve for full-time suspension spring assist and for dissipating jounce energy during jounce motions of the strut.

The upper end of the jounce bumper has an external mounting groove adjacent the upper end thereof that closely fits on to the radial attachment wall provided by the jounce plate and the radial wall of the jounce bumper attachment cup. The lower end of the jounce bumper contacts the upper end of the strut provided by a bumper plate fixed thereto. The upper end portion of the jounce bumper fits against the radial lower wall of the jounce plate to provide suspension spring assist.

The jounce bumper has an upper collar portion which extends above the radial attachment wall and is adapted to be contacted by the rate washer on downward movement of the piston rod in rebound to provide a rebound cushion, and preferably provides predetermined soft entry into rebound.

In addition, the lower end of the jounce bumper is formed with an annular retainer ring to serve as a resilient and releasable attachment for a plastics dust tube which extends downwardly from the jounce bumper around the outer periphery of the strut.

As will be evident from the foregoing description, especially when read in conjunction with the subsequent description of a preferred embodiment shown in the drawing, the upper mount assembly of the vehicle suspension strut assembly in accordance with the present invention utilises a new and improved bushing mounting assembly provided with an elastomeric bushing that is operatively mounted between a central piston rod mounting sleeve and a surrounding wall of the bushing mounting plate, to operatively connect the piston rod to support structure in the vehicle.

During operation on a smooth roadway, the bushing isolates the piston rod from the vehicle body with a low spring rate, so that excessive vibration and noise are not transmitted to the passenger compartment of the vehicle. A rate washer fixed to the piston rod is used to obtain the build-up of load in the elastomer piston rod bushing as the rod moves vertically upwardly in jounce action. Initially, when moved in jounce, the elastomer piston rod bushing is worked in shear, but subsequently it becomes compressed between the rate washer and the surrounding wall of the upper plate. Spring rate is controlled by the geometry of the washer, the shape of the bushing, and the characteristics of the elastomer used for the bushing. When the strut piston rod moves vertically downwardly in the rebound direction, the rate washer controls rebound load build-up. More particularly, the load increases in the rebound direction as a result of compression of an upper portion of the jounce bumper. The rate characteristics are controlled by the geometry of the upper portion of the jounce bumper in contact with the rate washer, and the material characteristics of the jounce bumper. The new and improved rate washer in conformity with the present invention has a positive stop position which limits over-travel of the mount.

The present invention thereby makes available a vehicle suspension strut assembly having a new and improved jounce bumper which provides a load path for suspension spring assist that is designed to provide a load/deflection curve to meet predetermined suspension characteristics.

In the drawing:

Figure 1 is a fragmentary elevational view, partially in section and partially diagrammatic, of a preferred embodiment of a suspension strut and upper mount therefor in accordance with the present invention;

Figure 2 is a fragmentary enlarged view showing an upper end of the strut and the upper mount therefor;

Figure 3 is a top view generally on the line 3--3 of Figure 2, in the direction of the arrows; and

Figure 4 is a curve showing operation of the jounce bumper providing suspension spring assist in jounce operation.

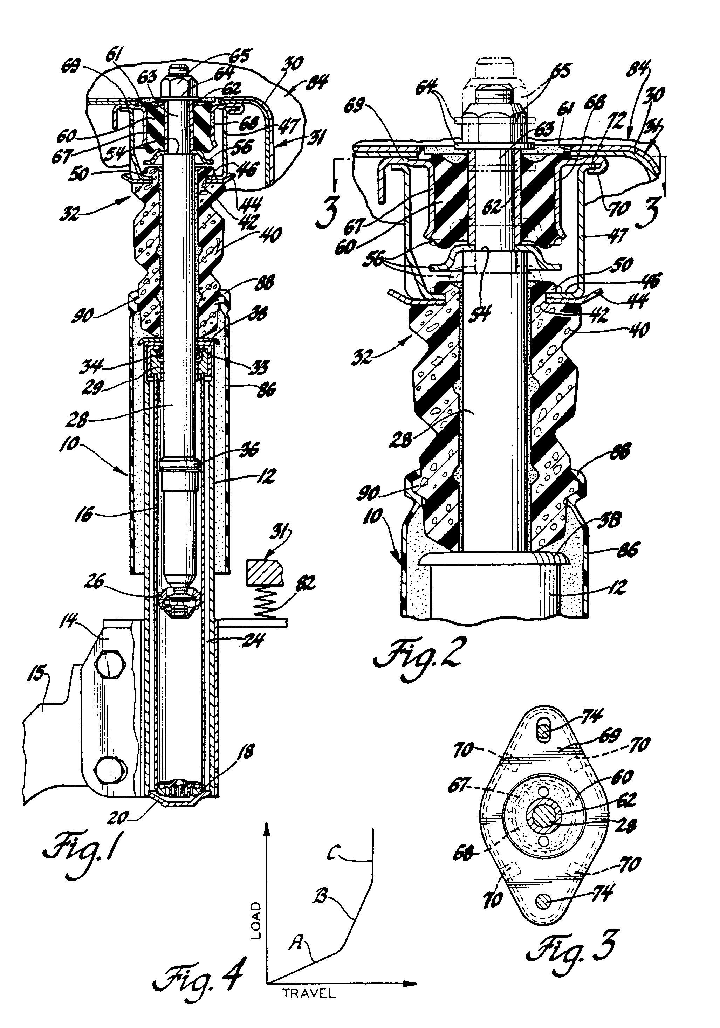

With reference now to the drawing, there is shown in Figure 1 a suspension strut 10 having an elongate outer support tube 12 with a bracket 14 fixed at its lower end for connection to a vehicle road wheel assembly 15 having a road wheel (not shown). Concentrically disposed within the outer support tube 12 is a cylinder tube 16 which has at its lower end a base valve 18 seated on an end plate 20 of the outer support tube. The base valve 18 controls the flow of shock absorber (damper) fluid between the interior of the cylinder tube 16 and a reservoir 24 that is formed between the outer support tube 12 and the cylinder tube 16.

Mounted for reciprocatory movement in the cylinder tube 16 is a valved piston 26 which has a piston rod 28 welded or otherwise secured thereto. From the piston 26 the piston rod 28 extends upwardly through a rod guide 29, mounted in the upper end of the cylinder tube 16, and into attachment with a mounting tower 30 or other support structure in the sprung part 31 of the vehicle by means of an upper mount and jounce bumper assembly 32, as will be further described.

The rod guide 29 is fixed within the upper end of the cylinder tube 16 by means of a cover plate 33 that is welded or otherwise secured to the outer support tube 12. A lip seal 34 seated in the rod guide 29 and retained in place by the cover plate 33 operatively fits around the piston rod 28 to prevent fluid leakage from the cylinder tube 16, and blocks the entry of foreign matter into the cylinder tube. A rebound stop 36, welded or otherwise secured to the piston rod 28 within the cylinder tube 16, is adapted to contact the lower end of the rod guide 29 to positively limit rebound motion as the strut elongates during rebound action.

Welded or otherwise fixed to the upper surface of the seal cover 33 is a bumper plate 38 through which the piston rod 28 extends. This bumper plate 38 is a generally flat washer-like member which extends radially beyond the limits of the cylinder tube and forms a contact for the lower end of a generally cylindrical jounce bumper 40 which is of a visco-elastic material such as a micro-cellular polyurethane foam that has predetermined load/deflection characteristics for cushioning jounce motion and providing suspension spring assist.

Preferably the jounce bumper 40 provides a variable-rate spring having a low rate during initial contact and a progressively increasing high rate as the strut moves further in jounce towards a terminal jounce position.

The upper end of the jounce bumper 40 is formed with a reduced-diameter neck to form an annular groove 42 which provides a fitting for a washer-like jounce plate 44 and the radially inwardly extending lower end wall 46 of a metallic jounce bumper connector cup 47. The lower end wall 46 of the jounce bumper connector cup 47 is welded or otherwise fixed to the jounce plate 44 to form a jounce plate assembly. The polyurethane-foam jounce bumper 40 has an integral thick collar portion 50 disposed on top of the end wall 46 within the connector cup 47, to provide a rebound cushion when the strut moves in rebound.

As is shown in Figures 1 and 2, the piston rod 28 is shouldered at 54, and receives an annular metallic rate washer 56 seated thereon. In jounce action, the rate washer 56 can crowd into the generally cylindrical elastomer piston rod bushing 60, as shown in dotted lines in Figure 2, to cushion jounce stroke of the piston, with the spring rate increasing with piston jounce travel. The tower 30 has an opening 61 allowing the upward bulk movement of the piston rod bushing 60 during this action.

The piston rod bushing 60 has an internal diameter bonded to a tubular metal sleeve 62 that fits on the reduced-diameter upper end portion 63 of the piston rod 28 extending upwardly from the shoulder 54. The metallic sleeve 62 and the piston rod bushing 60 are retained on the piston rod 28 by means of an upper flat washer 64 and a top nut 65 that is threaded on the end of the piston rod 28 until the rate washer 56 is in firm contact with the shoulder 54 of the piston rod 28.

The outer surface of the elastomer piston rod bushing 60 is bonded to the interior surface of a generally cylindrical neck 67 of a metallic bushing mount plate 68. From the upper end of the neck 67, the bushing mount plate 68 has an outwardly extending top flange 69 to fit against the underside of the mounting tower 30, for subsequent attachment thereto. The sleeve 62, the elastomer bushing 60, the bushing mount plate 68 and the rate washer 56 are joined together to provide an upper plate and piston rod bushing assembly.

The top flange 69 of the bushing mount plate 68 has downwardly depending tabs 70 that are bent around the mating flange 72 of the jounce bumper connector cup 47 to secure the upper plate and piston rod bushing assembly to the jounce cup and bumper assembly. Conventional threaded fasteners 74 extend through openings in the mounting tower 30 and through the flanges 69 and 72 of the bushing mount plate 68 and the cup 47 to secure the upper mount and jounce bumper assembly to the mounting tower 30.

The unitized upper mount and jounce bumper assembly can be readily slipped on to the piston rod as a unit and locked in position by the nut 65. The piston rod bushing 60 and the mounting plate 68 are enclosed and environmentally protected by the cup 47 and the jounce bumper 40.

In Figures 1 and 2, the strut is shown in its normal position. The jounce bumper 40, acting in parallel with the main suspension spring 82 shown diagrammatically in Figure 1, provides supplemental spring support of the vehicle body. In jounce, the jounce movement causes deflection and provides suspension spring assist, as illustrated by the load/travel curve of Figure 4. Accordingly, as the bumper 40 is deflected in jounce, the polyurethane foam is compressed to a fraction of its shape (primarily, length) illustrated in Figures 1 and 2, to provide rapidly increasing resistance to jounce motion.

Spring assist is shown in Figure 4, with the load curve segment A illustrating an initial progressively increasing resistance to jounce travel occurring at a selected rate. As the jounce bumper 40 is further compressed, the spring rate increases, as shown by the segment B of the curve. As the bumper plate 38 approaches the jounce plate 44, the jounce bumper 40 is fully compressed, as shown by the curve segment C, and full jounce loads are transmitted to the lower jounce plate 44 and the cup 47, and thence to the vehicle body, without any further appreciable cushioning of the jounce action by the jounce bumper 40.

A plastics dust tube 86 has a reduced-diameter upper end 88 which slip-fits on to a resilient annular connector rib 90 of the jounce bumper 40. The upper end of the dust tube 86 controls deformation of the lower portion of the jounce bumper 40 as the jounce bumper is deflected by the bumper plate 38. The dust tube 86, being connected to the jounce bumper 40, forms part of the assembly.

The elastomer piston rod bushing 60 provides a variable-rate spring connecting the piston rod 28 to the mounting tower 30 in the vehicle 84. As the piston rod 28 reciprocates in the cylinder tube 16, as in normal highway cruising, piston rod motions are isolated by the elastomer piston rod bushing 60, which is initially worked in shear to provide a low-rate spring.

On jounce that may occur when the road wheel encounters a bump, the rate washer 56 is moved vertically upwardly as viewed in Figure 2, towards a terminal position shown in dotted lines. Initial travel of the rate washer 56 works the elastomeric material of the mount in shear, but with further travel the elastomer is soon worked in compression between the washer 56 and the outside metal of the shear mount, and the spring rate accordingly increases.

The rate is controlled by the geometry of the washer 56, the shape of the bushing metal, and the characteristics of the mount itself.

At full jounce, the rate washer 56 contacts the bottom part of the neck 67 of the bushing mount plate 68, which provides a stop for limiting excessive deflection of the bushing 60.

On rebound, the outer collar portion 50 of the jounce bumper 40 will be contacted by the rate washer 56, as shown in the lower dotted-line position, to control and cushion the downward movement of the piston 26 as it strokes in rebound, to provide soft entry in rebound.

The whole upper mount constitutes an assembly which can be readily installed as a unit on to the strut, whereupon the strut can be moved into position on the vehicle and secured thereto by means of the threaded fasteners 74.

## Claims

1. A suspension strut assembly for use in a vehicle having suspension spring means operatively interposed between a road wheel assembly and a vehicle body, the suspension strut assembly being effective to mount a road wheel of the vehicle to support structure associated with the body and being movable in jounce and rebound, and comprising a cylinder tube (16) having a hydraulic fluid therein, a support tube (12) disposed around the cylinder tube (16) and having a lower end operatively connected to the vehicle road wheel assembly (15), a valved piston (26) operatively mounted for reciprocatory movement in the cylinder tube (16) and having a piston rod (28) operatively connected thereto and extending out of the cylinder tube (16) and the support tube (12), the piston rod (28) being operatively connected to the support structure (31) associated with the vehicle body by means of an upper strut mount assembly such that the piston (26) controls vehicle ride motions, the upper strut mount assembly comprising a first mounting plate (68,69) fixed to the support structure (31), a piston rod bushing (60) of resilient material having an outer wall operatively secured to the first mounting plate (68,69), the piston rod bushing (60) also having an internal wall, means operatively securing the internal wall of the piston rod bushing (60) to an upper end portion of the piston rod (28), a second mounting plate (47) secured relative to the support structure (31), resilient cushion means (40) secured to the second mounting plate (47) and spaced from the piston rod bushing (60) and adapted to abut and to be compressed by the outer support tube (12) so as to dissipate jounce loads transmitted through the outer support tube (12), and a rate washer (56) mounted on the piston rod (28) between the piston rod bushing (60) and the resilient cushion means (40) for directly contacting and working the bushing (60) in shear during jounce motions of the strut (10) and the piston rod (28) such that the piston rod bushing (60) produces a first retarding force; characterised in that the rate washer (56) and the piston rod bushing (60) are constructed so as to cause the piston rod bushing (60) to be worked in shear during initial jounce motion of the strut (10) and piston rod (28) to produce a retarding force having a first rate, and to cause the piston rod bushing (60) to be worked in compression during further jounce motion of the strut (10) and piston rod (28) to produce a retarding force at a second rate, thereby providing a variable-rate retarding force between the vehicle support structure and the road wheel, having a low rate during initial jounce motion and a higher rate during further jounce motion.

2. A suspension strut assembly according to claim 1, characterised in that the cushion means (40) comprises a jounce bumper of resilient cellular material having an upper portion (50) secured in a fixed position to the second mounting plate (47) below the piston rod bushing (60) and the rate washer (56) for direct contact with and deflection by the rate washer (56) on rebound motion of the strut (10), to thereby cushion rebound loading of the piston rod (28).

3. A suspension strut assembly according to claim 1 or 2, characterised in that a contact plate (38) is fixed to the upper end of the support tube (10) and that, in the upper strut mount assembly, the piston rod bushing (60) is of resilient elastomeric material and is disposed radially outwardly of the upper end portion of the piston rod (28), the first mounting plate (68,69) comprises an upper support plate, the second mounting plate (47) comprises a jounce bumper attachment plate and is secured to the upper support plate (68,69), the resilient cushion means 40 comprises a resilient jounce bumper directly engaging the contact plate (38) to provide full-time suspension spring assist as well as cushioning jounce action of the strut (10) as it moves on towards the support structure (31), and the jounce bumper (40) has a collar portion (50) that is deflected in response to rebound loads applied by the rate washer (56), to cushion rebound action as the strut (10) moves away from the support structure (31).

4. A suspension strut assembly according to claim 3, characterised in that the jounce bumper (40) is of elastomeric material and has a lower part effective to provide suspension spring assist and an upper part effective to cushion jounce action of the strut as it moves on towards the support structure (31), and the rate washer (56) is effective to work the material of the piston rod bushing (60) and the jounce bumper (40) to cushion both jounce and rebound action of the piston rod (28).

5. A suspension strut assembly according to claim 4, characterised in that the piston rod bushing (60) is mounted in parallel with the jounce bumper (40), to isolate the piston rod (28) from the support structure (31) and thereby diminish the transmission of vibratory energy to the vehicle body.

6. A suspension strut assembly according to any one of claims 1 to 5, characterised in that the upper mount assembly comprises a unitized upper plate and piston rod bushing assembly operatively connecting the piston rod (28) of the strut (10) to the support structure (31), the upper plate and piston rod bushing assembly comprising a first mounting plate (68,69) as aforesaid in the form of an outer metallic bushing mounting plate and provided with a neck portion (67), an elastomeric piston rod bushing (60) as aforesaid secured in the neck portion (67), a sleeve (62) disposed around the upper end portion of the piston rod (28) and attached to the internal wall of the piston rod bushing (60), a rate washer (56) as aforesaid disposed beneath the piston rod bushing (60) and secured to the piston rod (28) for working the piston rod bushing (60) both in shear and in compression against an outer wall constituted by an internal surface of the neck portion (67) of the upper plate and piston rod bushing assembly, to cushion jounce action of the strut (10), and a resilient cushion (50) operatively disposed beneath the rate washer (56) and providing spring support for the vehicle and, when contacted by the rate washer (56), cushioning rebound action of the strut (10).

**Revendications**

1. Ensemble de jambe de suspension prévu pour être utilisé dans un véhicule pourvu d'un dispositif de suspension à ressort intercalé de façon fonctionnelle entre un ensemble de roue en contact avec la route et une caisse de véhicule, l'ensemble de jambe de suspension permettant de monter une roue du véhicule, en contact avec la route, sur une structure de support associée à la caisse de véhicule, la jambe de suspension pouvant effectuer des mouvements de compression et de détente, et comprenant un tube cylindrique (16) contenant un fluide hydraulique, un tube (12) de support disposé autour du tube cylindrique (16) et relié de façon fonctionnelle, par son extrémité inférieure, à l'ensemble (15) de roue du véhicule, un piston (26) à clapet, monté de façon fonctionnelle dans le tube cylindrique (16) de manière à y effectuer des mouvements alternatifs et fixé sur une tige (28) de piston qui s'étend jusqu'à l'extérieur du tube cylindrique (16) et du tube (12) de support et est reliée de façon fonctionnelle à la structure (31) de support associée à la caisse du véhicule, au moyen d'un ensemble de fixation supérieur de la jambe de suspension, de telle sorte que le piston (26) contrôle et régule les mouvements de roulage du véhicule, l'ensemble de fixation supérieur de la jambe de suspension comprenant une première plaque (68, 69) de montage fixée sur la structure (31) de support, un coussinet (60) de maintien de la tige de piston, réalisé en une matière élastique, qui possède une paroi externe reliée de façon fonctionnelle à la première plaque (68, 69) de montage, et qui possède une paroi interne, un dispositif étant prévu qui fixe de façon fonctionnelle la paroi interne du coussinet (60) de maintien de la tige de piston à l'extrémité supérieure de la tige (28) de piston, l'ensemble de fixation comportant ensuite une deuxième plaque (47) de montage fixée par rapport à la structure (31) de support, un coussinet élastique (40) fixé sur la deuxième plaque (47) de montage, espacé par rapport au coussinet (60) de maintien de la tige de piston et réalisé de façon à buter contre le tube extérieur (12) de support et à être comprimé par celui-ci, de manière à amortir les charges de compression brutale transmises par l'intermédiaire du tube extérieur (12) de support, et une rondelle de tarage (56) installée sur la tige (28) de piston, entre le coussinet (60) de maintien de la tige de piston et le coussinet élastique (40), de façon à s'appuyer directement sur le coussinet (60) et à le faire travailler en cisaillement lors des mouvements de compression brutale de la jambe (10) de suspension et de la tige (28) de piston, de telle manière que le coussinet (60) de maintien de la tige de piston produise un premier effort retardateur; caractérisé en ce que la rondelle de tarage (56) et le coussinet (60) de maintien de la tige de piston sont réalisés de façon à amener le coussinet (60) de maintien de la tige de piston à travailler en cisaillement lors d'un mouvement initial de compression brutale de la jambe (10) de suspension et de la tige (28) de piston, pour produire un premier coefficient d'effort retardateur, et de façon à amener le coussinet (60) de maintien de la tige de piston à travailler en compression lors de la poursuite du mouvement de compression brutale de la jambe (10) de suspension et de la tige (28) de piston, pour produire un deuxième coefficient d'effort retardateur, ce qui fait que l'on obtient entre la structure de support du véhicule et la roue en contact avec la route un coefficient variable de l'effort retardateur, cet effort ayant un coefficient faible lors d'un mouvement initial de compression brutale, et un coefficient plus fort lors de la poursuite du mouvement de compression brutale.

2. Ensemble de jambe de suspension selon la revendication 1, caractérisé en ce que le coussinet (40) comporte une butée de compression réalisée en une matière cellulaire élastique, dont la partie supérieure (50) est maintenue en position fixe sur la deuxième plaque (47) de montage en-dessous du coussinet (60) de maintien de la tige de piston, et de la rondelle de tarage (56), cette partie supérieure de la butée étant destinée à entrer en contact direct avec la rondelle de tarage (56), et à être déformée par celle-ci, lors d'un mouvement de détente de la jambe (10) de suspension, afin d'amortir ainsi la charge de détente de la tige (28) de piston.

3. Ensemble de jambe de suspension selon la revendication 1 ou 2, caractérisé en ce qu'une rondelle (38) de contact est fixée sur l'extrémité supérieure du tube (10) de support, et en ce que le coussinet (60) de maintien de la tige de piston, situé dans l'ensemble supérieur de fixation de la jambe de suspension, est réalisé en une matière élastique élastomère et est disposé radialement à l'extérieur de l'extrémité supérieure de la tige (28) de piston, en ce que la première plaque (68, 69) de montage comprend une plaque de support supérieure, en ce que la deuxième plaque (47) de montage comporte une plaque de fixation pour le coussinet de butée de compression et est fixée sur la première plaque (68, 69) de support, en ce que le coussinet élastique (40) comporte une butée élastique de compression s'appuyant directement sur la rondelle (38) de contact de manière à fournir un dispositif d'assistance permanente du ressort de suspension et également à remplir une fonction d'amortissement de l'action de compression brutale de la jambe (10) de suspension, lorsque celle-ci se déplace vers la structure (31) de support, et en ce que le coussinet (40) de butée de compression est pourvu d'une collerette (50), qui est déformée en raison des charges de détente appliquées par l'intermédiaire de la rondelle de tarage (56), amortissant ainsi l'action de détente lorsque la jambe (10) de suspension s'éloigne de la structure (31) de support.

4. Ensemble de jambe de suspension selon la figure 3, caractérisé en ce que le coussinet (40) de butée de compression est réalisé en une matière élastomère et comporte une partie inférieure destinée à fournir un dispositif d'assistance permanente pour le ressort de suspension, et une partie supérieure servant à amortir l'action de compression brutale de la jambe de suspension lorsque celle-ci se déplace vers la structure (31) de support, et en ce que la rondelle de tarage (56) fonctionne de façon à agir sur la matière du coussinet (60) de maintien de la tige de piston et celle du coussinet (40) de butée de compression, de manière à amortir l'action de compression brutale et l'action de détente de la tige (28) de piston.

5. Ensemble de jambe de suspension selon la revendication 4, caractérisé en ce que le coussinet (60) de maintien de la tige de piston est monté en parallèle avec le coussinet (40) de butée de compression, de manière à isoler la tige (28) de piston de la structure (31) de support, et a réduire ainsi la transmission de l'énergie vibratoire à la caisse du véhicule.

6. Ensemble de jambe de suspension selon l'une quelconque des revendications 1 à 5, caractérisé en ce que l'ensemble supérieur de fixation comprend un ensemble composé par la plaque supérieure de montage et le coussinet de maintien de la tige de piston, formant une unité, qui relie de façon fonctionnelle la tige (28) du piston de la jambe (10) de suspension à la structure (31) de support, l'ensemble formé par la plaque supérieure de montage et par le coussinet comportant une première plaque (68, 69) de montage mentionnée ci-dessus, réalisée sous forme d'une plaque métallique extérieure de montage du coussinet et dotée d'un goulot (67), un coussinet (60) de maintien de la tige de piston, réalisé en élastomère, comme mentionné ci-dessus, qui est fixé dans le goulot (67), une douille (62) disposée autour de l'extrémité supérieure de la tige (28) de piston et fixée sur la paroi interne du coussinet (60) de maintien de la tige de piston, une rondelle de tarage (56) telle que mentionnée ci-dessus, disposée en-dessous du coussinet (60) de maintien de la tige de piston et attachée à la tige (28) de piston de manière à faire travailler le coussinet (60) de maintien de la tige de piston en cisaillement et en compression, contre une paroi extérieure constituée par la face intérieure du goulot (67) de l'ensemble de plaque supérieure et de coussinet de maintien de la tige de piston, et à amortir l'action de détente de la jambe (10) de suspension, et un coussinet élastique (50) disposé de façon fonctionnelle endessous de la rondelle de tarage (56), qui renforce l'action du ressort de suspension du véhicule et, lorsque la rondelle de tarage (56) vient en contact avec ce coussinet, amortit l'action de détente de la jambe (10) de suspension.

**Patentansprüche**

1. Federbeinanordnung zur Verwendung bei einem Fahrzeug, das wirksam zwischen einer Straßenradanordnung und einer Fahrzeugkarosserie eingesetztes Aufhängungs-Federmittel besitzt, wobei die Federbeinanordnung das Anbringen eines Straßenrades des Fahrzeuges an der mit der Karosserie verbundenen Tragstruktur bewirkt und in Stoß und Rückstoß bewegbar ist, und umfaßt ein Zylinderrohr (16), das mit einem darin befindlichen Hydraulikfluid, ein um das Zylinderrohr (16) angeordnetes Stützrohr (12) mit einem unteren Ende, das wirksam mit der Fahrzeug-Straßenradanordnung (15) verbunden ist, einen mit Ventil versehenen Kolben (26), der zur Hin- und Herbewegung wirksam in dem Zylinderrohr (16) angebracht ist und an dem eine sich aus dem Zylinderrohr (16) und dem Stützrohr (12) heraus erstreckende Kolbenstange (28) wirksam angeschlossen ist, welche Kolbenstange (28) wirksam mit der der Fahrzeugkarosserie zugeordneten Tragstruktur (31) mittels einer oberen Federbeinbefestigungsanordnung so verbunden ist, daß der Kolben (26) Fahrzeug-Fahrbewegungen steuert, die obere Federbeinfestigungsanordnung umfaßt eine erste an der Tragstruktur (31) befestigte Montageplatte (68, 69), und eine Kolbenstangenbüchse (60) aus elastischem Material mit einer wirksam an der ersten Montageplatte (68, 69) sicher befestigten Außenwand, welche Kolbenstangenbüchse (60) auch eine Innenwand besitzt, Mittel, die die Innenwand der Kolbenstangenbüchse (60) wirksam an einem oberen Endabschnitt der Kolbenstange (28) befestigen, eine relativ zu der Tragstruktur (31) sicher befestigte zweite Montageplatte (47), an der zweiten Montageplatte (47) mit Abstand von der Kolbenstangenbüchse (60) sicher an der zweiten Montageplatte (47) befestigtes elastisches Kissenmittel (40), das dazu ausgelegt ist, an dem äußeren Stützrohr (12) anzustoßen und durch dieses komprimiert zu werden, um so durch das äußere Stützrohr (12) übertragene Stoßbelastungen aufzunehmen, und eine an der Kolbenstange (48) zwischen der Kolbenstangenbüchse (60) und dem elastischen Kissenmittel (40) angebrachte bemessene Beilagscheibe (56) zur direkten Berührung mit und Einwirkung in Scherbelastung auf die Büchse (60) während Stoßbewegungen des Federbeins (10) und der Kolbenstange (28), so daß die Kolbenstangenbüchse (60) eine erste Verzögerungskraft erzeugt; dadurch gekennzeichnet, daß die bemessene Beilagscheibe (56) und die Kolbenstangenbüchse (60) so aufgebaut sind, daß sie eine Einwirkung in Scherbelastung auf die Kolbenstangenbüchse (60) während der Einleitung der Stoßbewegung des Federbeins (10) und der Kolbenstange (28) zur Erzeugung einer Verzögerungskraft mit einer ersten Rate verursachen und eine Einwirkung in Scherbelastung auf die Kolbenstangenbüchse (60) in Kompression während der weiteren Stoßbewegung des Federbeins (10) und der Kolbenstange (28) zur Erzeugung einer Verzögerungskraft mit einer zweiten Rate verursachen, und dadurch eine Verzögerungskraft variabler Rate zwischen dem Tragaufbau des Fahrzeuges und dem Straßenrad schaffen mit einer niedrigen Rate während der Einleitung der Stoßbewegung und einer höheren Rate während der weiteren Stoßbewegung.

2. Federbeinanordnung nach Anspruch 1, dadurch gekennzeichnet, daß das Kissenmittel (40) einen Stoßdämpfer aus elastischem porösen Material umfaßt mit einem oberen Abschnitt (50), der in einer festen Position zu der zweiten Montageplatte (47) unter der Kolbenstangenbüchse (60) und der bemessenen Beilagscheibe (56) befestigt ist zur direkten Berührung mit und Ablenkung durch die bemessene Beilagscheibe (56) bei Rückstoßbewegung des Federbeins (10), um dadurch Rückstoßbelastung der Kolbenstange (28) abzupolstern.

3. Federbeinanordnung nach Anspruch 1 oder 2, dadurch gekennzeichnet, daß eine Kontaktplatte (38) an dem oberen Ende des Stützrohres (10) befestigt ist und daß in der oberen Federbein-Befestigungsanordnung die Kolbenstangenbüchse (60) aus elastischem Elastomermaterial und radial außerhalb des oberen Endabschnittes der Kolbenstange (28) angeordnet ist, die erste Montageplatte (68, 69) eine obere Stützplatte umfaßt, die zweite Montageplatte (47) eine Stoßdämpfer-Befestigungsplatte umfaßt und an der oberen Stützplatte (68, 90) befestigt ist, das elastische Kissenmittel (40) einen elastischen Stoßdämpfer umfaßt, der direkt an der Kontaktplatte (38) angreift, um eine dauernde Aufhängungs-Federhilfe zu schaffen wie auch die Stoßwirkung des Federbeins (10) abzupolstern, wenn es sich gegen die Tragstruktur (31) hin bewegt, und der Stoßdämpfer (40) einen Kragenabschnitt (50) besitzt, der in Reaktion auf durch die bemessene Beilagscheibe (56) angelegte Rückstoßbelastung abgelenkt wird, um Rückstoßwirkung abzupolstern, wenn das Federbein (10) sich von der Tragstruktur (31) wegbewegt.

4. Federbeinanordnung nach Anspruch 3, dadurch gekennzeichnet, daß der Stoßdämpfer (40) aus elastomerem Material ist und einen unteren Teil besitzt, der zum Schaffen von Aufhängungs-Federhilfe wirksam ist, und einen oberen Teil, der wirksam ist, stoßwirkung des Federbeins bei seiner Bewegung zu der Tragstruktur (31) hin abzupolstern, und die bemessene Beilagscheibe (56) wirksam ist, auf das Material der Kolbenstangenbüchse (60) und des Stoßdämpfers (40) einzuwirken, um sowohl Stoß- wie Rückstoßwirkung der Kolbenstange (28) abzupolstern.

5. Federbeinanordnung nach Anspruch 4, dadurch gekennzeichnet, daß die Kolbenstangenbüchse (60) parallel zu dem Stoßdämpfer (40) angebracht ist, um die Kolbenstange (28) von der Tragstruktur (31) zu isolieren und dadurch die Übertragung von Vibrationsenergie auf die Fahrzeugkarosserie zu vermindern.

6. Federbeinanordnung nach einem der Ansprüche 1 bis 5, dadurch gekennzeichnet, daß die obere Befestigungsanordnung umfaßt eine wirksam die Kolbenstange (28) des Federbeins (10) mit der Tragstruktur (31) verbindende vereinigte Anordnung aus oberer Platte und Kolbenstangenbüchse, wobei die Anordnung aus oberer Platte und Kolbenstangenbüchse umfaßt eine erste Montageplatte (68, 69), wie erwähnt, in Form einer äußeren metallischen mit einem Halsabschnitt (67) versehenen Büchsenbefestigungsplatte, eine in dem Halsabschnitt (67) befestigte elastomere Kolbenstangenbüchse (60) der genannten Art und eine um den oberen Endabschnitt der Kolbenstange (28) angeordnete und an der Innenwand der Kolbenstangenbüchse (60) angebrachte Hülse (62), eine bemessene Beilagscheibe (56) der genannten Art, die unterhalb der Kolbenstangenbüchse (60) angeordnet und an der Kolbenstange (28) befestigt ist zum Einwirken auf die Kolbenstangenbüchse (60) sowohl in Scher- wie in Kompressionsrichtung gegen eine durch eine Innenfläche des Halsabschnittes (67) der Anordnung aus oberer Platte und Kolbenstangenbüchse gebildete Außenwand, um Stoßwirkung des Federbeins abzupolstern, und ein wirksam unterhalb der bemessenen Beilagscheibe (56) angeordnetes elastisches Kissen (50), das eine Federabstützung für das Fahrzeug schafft und bei Beaufschlagung durch die bemessene Beilagscheibe (56) Rückstoßwirkung des Federbeins (10) abpolstert.

Fig.1

Fig.2

Fig.3

Fig.4